# EUROPÄISCHE PATENTSCHRIFT

(11) **EP 3 727 738 B1**
(45) Veröffentlichungstag und Bekanntmachung des Hinweises auf die Patenterteilung: **21.06.2023**
(21) Anmeldenummer: 18804329.3
(22) Anmeldetag: 21.11.2018
(51) Int. Cl.: B23K 9/20

(54) **BOLZENSCHWEISSPISTOLE UND -VERFAHREN**
STUD WELDING GUN AND METHOD
PISTOLET DE SOUDAGE DE GOUJONS ET PROCÉDÉ

(30) Priorität: 20.12.2017 EP 17208713
(43) Veröffentlichungstag der Anmeldung: 28.10.2020
(73) Patentinhaber: Hilti Aktiengesellschaft, 9494 Schaan (LI)
(72) Erfinder: POPP, Uwe, 9443 Widnau (CH); BERTSCH, Klaus, 6820 Frastanz (AT)
(74) Vertreter: Hilti Aktiengesellschaft Corporate Intellectual Property
(86) Internationale Anmeldenummer: PCT/EP2018/082102
(87) Internationale Veröffentlichungsnummer: WO 2019/120842

(56) Entgegenhaltungen:
- DE-C- 906 963
- DE-C1- 3 606 613
- DE-U1-202013 104 503
- FR-A1- 2 915 911

## Beschreibung

### Technisches Gebiet

Die Erfindung betrifft allgemein eine Vorrichtung und ein Verfahren zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Dazu wird der Bolzen von einem elektrisch leitfähigen Bolzenhalter gehalten.

Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

Aus DE 906 963 C (welche die Basis für den Oberbegriff des unabhängigen Anspruchs 1 bildet) ist eine elektrische Lötpistole bekannt, bei der ein Bolzen mittels einer Magnetkraft von einer Unterlage zurückgezogen wird. Der den Bolzen haltende Teil der Pistole ist im Verhältnis zu dem der Einwirkung der Magnetkraft ausgesetzten Teil breit verschiebbar. Beim Einschalten des Schweissstroms werden die beiden genannten Teile selbsttätig in festen Eingriff miteinander gebracht.

Aus DE 20 2013 104503 U1 ist eine Schweissvorrichtung mit einem Kolben und einem Hubmechanismus bekannt, bei der der Kolben durch einen Hubmagneten des Hubmechanismus angezogen werden kann. Ein Verbindungselement stellt eine temporär haltende Verbindung zwischen dem Kolben und einem Anker des Hubmechanismus her, welche von einer Lösevorrichtung durch Erzeugen einer Bewegung des Verbindungselements wieder gelöst wird.

Aus FR 2 915 911 A1 ist ein Widerstandschweissgerät bekannt, welches einen Lichtbogen mit niedriger Spannung erzeugt. Mit Hilfe des Lichtbogens werden Schweissbolzen an ein Aluminium-Bauteil geschweisst.

Aus DE 36 06 613 C1 ist ein Bolzenschweissgerät mit einer Magnetspule und einem Tauchanker bekannt, bei dem der Schweissbolzen um einen Hub von einem Werkstück zurückgezogen wird, indem eine Wicklung der Magnetspule erregt wird. Der Hub wird durch einen Ankeranschlag festgelegt, der zur Einstellung des Hubs gemeinsam mit der Magnetspule in Achsrichtung des Tauchankers verschiebbar angeordnet ist.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Diese Aufgabe ist gelöst bei einer Schweisspistole nach Anspruch 1.

Eine vorteilhafte Ausführungsform ist dadurch gekennzeichnet, dass die Schweisspistole eine die Haltevorrichtung relativ zur Bolzenabhubeinrichtung in der Schweissrichtung beaufschlagende Haltefeder umfasst. Eine weitere vorteilhafte Ausführungsform ist dadurch gekennzeichnet, dass die Schweisspistole eine die Bolzenabhubeinrichtung relativ zum Auflageelement in der Schweissrichtung beaufschlagende Mitnahmefeder aufweist. Bevorzugt ist eine Federhärte der Mitnahmefeder grösser als eine Federhärte der Haltefeder.

Eine vorteilhafte Ausführungsform ist dadurch gekennzeichnet, dass die Bolzenabhubeinrichtung dafür geeignet ist, das Mitnahmeelement aus der Mitnahmestellung in die Freigabestellung zu versetzen, wenn die Haltevorrichtung zur Eintauchstartposition befördert wird.

Die Aufgabe ist ebenfalls gelöst bei einem Verfahren nach Anspruch 6.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: eine Schweisspistole in einer teilweisen Längsschnittsansicht,
- Fig. 3: die Schweisspistole aus Fig. 2 in einer teilweisen Längsschnittsansicht
- Fig. 4: die Schweisspistole aus Fig. 2 bis 3 in einer teilweisen Längsschnittsansicht, und
- Fig. 5: die Schweisspistole aus Fig. 2 bis 4 in einer teilweisen Längsschnittsansicht.

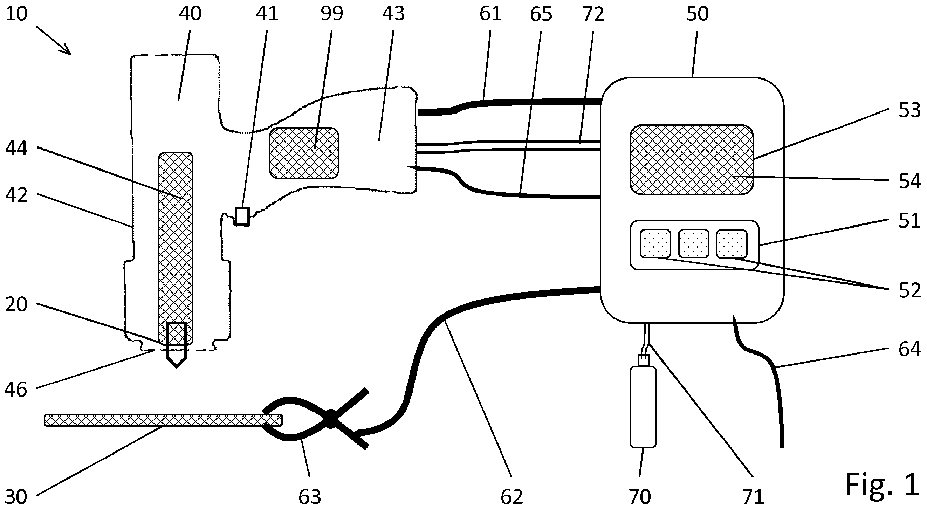

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

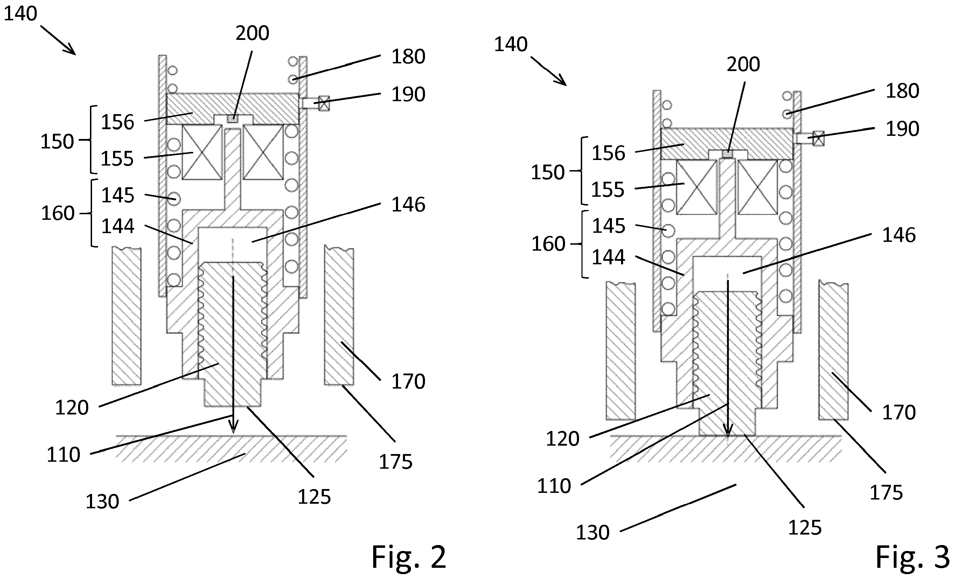

In den Fig. 2 bis 5 ist eine Schweisspistole 140 zur Verschweissung eines Schweissbolzens 120 mit einer Kontaktfläche 125 in einer Schweissrichtung 110 mit einem Untergrund 130 in einem Längsschnitt dargestellt. Die Schweisspistole 140 umfasst eine als Bolzenhalter ausgebildete Haltevorrichtung 144 zum Halten des Schweissbolzens 120 während eines Schweissvorgangs. Hierzu weist die Haltevorrichtung 144 eine Bolzenaufnahme 146 auf. Die Schweisspistole umfasst weiterhin eine Bolzenabhubeinrichtung 150 für eine Beförderung der Haltevorrichtung 144 gegen die Schweissrichtung 110 bis zu einer Eintauchstartposition, wobei die Bolzenabhubeinrichtung 150 einen Hubmagneten 155 und einen Träger 156 umfasst, wobei der Hubmagnet 155 an dem Träger 156 befestigt ist.

Die Schweisspistole 140 umfasst eine Bolzeneintaucheinrichtung 160 für eine Beförderung der Haltevorrichtung 144 von der Eintauchstartposition in die Schweissrichtung 110. Die Bolzeneintaucheinrichtung 160 umfasst eine die Haltevorrichtung 144 relativ zur Bolzenabhubeinrichtung 150 in der Schweissrichtung 110 beaufschlagende Haltefeder 145 und die Haltevorrichtung 144. Die Schweisspistole 140 umfasst weiterhin ein Auflageelement 170 mit einer Auflagefläche 175 für eine Auflage der Schweisspistole 140 auf dem Untergrund 130. Die Schweisspistole 140 umfasst ferner eine die Bolzenabhubeinrichtung 150 relativ zum Auflageelement 170 in der Schweissrichtung 110 beaufschlagende Mitnahmefeder 180, deren Federhärte grösser als eine Federhärte der Haltefeder 145 ist.

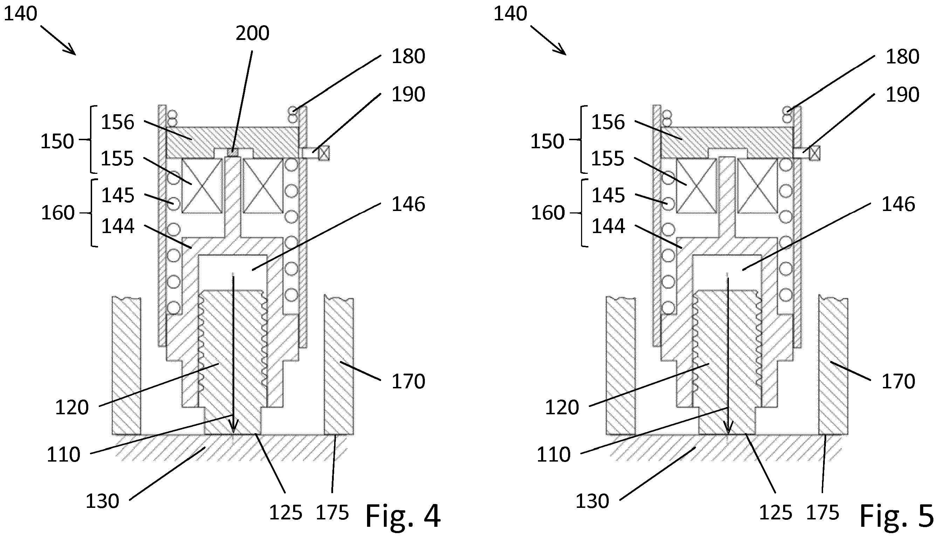

Die Schweisspistole 140 umfasst weiterhin eine nicht mit Bezugszeichen versehene Einrichtung zur automatischen Anpassung der Eintauchstartposition relativ zu der Auflagefläche 175 in der Schweissrichtung 110. Diese Anpassungseinrichtung umfasst die Haltevorrichtung 144, den Träger 156, die Mitnahmefeder 180, ein Verriegelungselement 190 für eine Verriegelung der Bolzenabhubeinrichtung 150 in zwei oder mehr verschiedenen Positionen relativ zu der Auflagefläche 175 und ein Mitnahmeelement 200. Das Mitnahmeelement 200 ist zwischen einer in den Fig. 2 bis 4 gezeigten Mitnahmestellung und einer Freigabestellung gemäss Fig. 5 versetzbar.

Die Schweisspistole 140 ist wie folgt zu verwenden. Zunächst wird der Schweissbolzen 120 an der Haltevorrichtung 144 gehalten, in dem er in die Bolzenaufnahme 146 aufgenommen wird, beispielsweise durch Einstecken (Fig. 2). Dann wird die Schweisspistole 140 mit dem Schweissbolzen 120 an den Untergrund 130 angesetzt, so dass die Kontaktfläche 125 den Untergrund kontaktiert. Dann wird die Schweisspistole 140 in Schweissrichtung 110 an den Untergrund 130 angedrückt, bis die Haltevorrichtung 144 an dem Mitnahmeelement 200 anliegt (Fig. 3). Hierbei wird die Haltefeder 145 gespannt. Dann wird die Schweisspistole 140 weiter an den Untergrund 130 angedrückt, bis die Auflagefläche 175 an dem Untergrund 130 anliegt (Fig. 4). Hierbei wird die Mitnahmefeder 200 gespannt und die Bolzenabhubeinrichtung 150 mit dem Träger 156 gegenüber dem Auflageelement 170 gegen die Schweissrichtung 110 verschoben, indem das Mitnahmeelement 200 in der Mitnahmestellung die Bewegung der Haltevorrichtung 144 gegen die Schweissrichtung 110 auf die Bolzenabhubeinrichtung 150 überträgt. Dann wird die Bolzenabhubeinrichtung 150 mit dem Träger 156 mittels des Verriegelungselements 190 verriegelt und das Mitnahmeelement 200 in die Freigabestellung versetzt (Fig. 5), in welcher es ausserhalb der Zeichenebene angeordnet ist, so dass es in Fig. 5 nicht zu sehen ist. Das Verriegelungselement 190 verriegelt dabei den Träger 156 mittels eines Reibschlusses. Bei nicht gezeigten Ausführungsbeispielen verriegelt das Verriegelungselement die Bolzenabhubeinrichtung mittels eines Formschlusses und wird dazu linear verschoben und/oder verschwenkt.

Jetzt ist die Schweisspistole 140 für einen Schweissvorgang bereit, während dessen die Haltevorrichtung 144 von der Bolzenabhubeinrichtung 150 gegen die Schweissrichtung 110 bis zur Eintauchstartposition und von der Bolzeneintaucheinrichtung 160 von der Eintauchstartposition in die Schweissrichtung 110 befördert wird. Hierzu gibt das Mitnahmeelement 200 in der Freigabestellung die Bewegung der Haltevorrichtung 144 gegen die Schweissrichtung 110 relativ zur Bolzenabhubeinrichtung 150 frei. Bevorzugt wird das Mitnahmeelement 200 von der Bolzenabhubeinrichtung 150, bevorzugt dem Hubmagneten 155, aus der Mitnahmestellung in die Freigabestellung versetzt, indem der Hubmagnet 155 zur Beförderung der Haltevorrichtung 144 zur Eintauchstartposition aktiviert wird. Bevorzugt ist das Mitnahmeelement 200 dann auf die Mitnahmestellung zu federbelastet. Das Mitnahmeelement 200 wird von der Mitnahmestellung zu der Freigabestellung linear bewegt. Bei nicht gezeigten Ausführungsbeispielen wird das Mitnahmeelement von der Mitnahmestellung zu der Freigabestellung verschwenkt. Bei weiteren nicht gezeigten Ausführungsbeispielen werden das Mitnahmeelement und das Verriegelungselement von einem gemeinsamen Aktor bewegt. Bei weiteren nicht gezeigten Ausführungsbeispielen werden das Mitnahmeelement, das Verriegelungselement und die Haltevorrichtung von einem gemeinsamen Aktor oder von drei voneinander unabhängigen Aktoren bewegt.

Die Eintauchstartposition hängt nun von einer Position der Kontaktfläche 125 ab und ist nur noch durch einen Hub des Hubmagneten 155 vorgegeben. Dadurch ist die gewünschte Eintauchstartposition auch bei unebenen Untergründen gewährleistet und wird nicht von einem Positionsunterschied zwischen der Auflagefläche 175 und der Kontaktfläche 125 in Schweissrichtung 110 beeinflusst.

Bevorzugt dient die Haltevorrichtung 144 der Schweisspistole 140 auch als Schweissstrom-Kontaktelement, so dass ein stabiler Schweissstrom sichergestellt ist. Ausserdem wird unter Umständen ein Verschleiss der Haltevorrichtung 144 reduziert.

Die Erfindung wurde anhand von Beispielen einer Schweisspistole sowie einem Verfahren zu ihrer Verwendung beschrieben. Die Merkmale der beschriebenen Ausführungsformen sind dabei auch beliebig miteinander innerhalb einer einzigen Schweisspistole beziehungsweise eines einzigen Schweissverfahrens kombinierbar. Der Schutzbereich wird durch die Ansprüche definiert.

## Patentansprüche

1. Schweisspistole (40) zur Verschweissung eines Schweissbolzens (20) in einer Schweissrichtung mit einem Untergrund (30), umfassend eine Haltevorrichtung (144) zum Halten des Schweissbolzens (20) während eines Schweissvorgangs, wobei der Schweissbolzen (20) eine Kontaktfläche (125) aufweist, welche dafür vorgesehen ist, vor und/oder während des Schweissvorgangs den Untergrund (30) zu kontaktieren, weiterhin umfassend eine Bolzenabhubeinrichtung (150) für eine Beförderung der Haltevorrichtung (144) gegen die Schweissrichtung bis zu einer Eintauchstartposition, weiterhin umfassend eine Bolzeneintaucheinrichtung (160) für eine Beförderung der Haltevorrichtung (144) von der Eintauchstartposition in die Schweissrichtung, weiterhin umfassend ein Auflageelement (170) mit einer Auflagefläche (175) für eine Auflage der Schweisspistole (40) auf dem Untergrund (30), **gekennzeichnet durch** eine Einrichtung zur Anpassung der Eintauchstartposition relativ zu der Auflagefläche (175) in der Schweissrichtung und zur Versetzung der Bolzenabhubeinrichtung (150) relativ zu der Auflagefläche (175) in der Schweissrichtung, umfassend ein Verriegelungselement (190) für eine Verriegelung der Bolzenabhubeinrichtung (150) in zwei oder mehr verschiedenen Positionen relativ zu der Auflagefläche (175) und ein Mitnahmeelement (200), welches zwischen einer Mitnahmestellung und einer Freigabestellung versetzbar ist, wobei das Mitnahmeelement (200) in der Mitnahmestellung eine Bewegung der Haltevorrichtung (144) gegen die Schweissrichtung auf die Bolzenabhubeinrichtung (150) überträgt, und wobei das Mitnahmeelement (200) in der Freigabestellung eine Bewegung der Haltevorrichtung (144) gegen die Schweissrichtung relativ zur Bolzenabhubeinrichtung (150) freigibt.

2. Schweisspistole (40) nach Anspruch 1, wobei die Schweisspistole eine die Haltevorrichtung (144) relativ zur Bolzenabhubeinrichtung (150) in der Schweissrichtung beaufschlagende Haltefeder (145) umfasst.

3. Schweisspistole (40) nach einem der vorhergehenden Ansprüche, wobei die Schweisspistole (40) eine die Bolzenabhubeinrichtung (150) relativ zum Auflageelement (170) in der Schweissrichtung beaufschlagende Mitnahmefeder (180) aufweist.

4. Schweisspistole (40) nach den Ansprüchen 2 und 3, wobei eine Federhärte der Mitnahmefeder (180) grösser ist als eine Federhärte der Haltefeder(145).

5. Schweisspistole (40) nach einem der vorhergehenden Ansprüche, wobei die Bolzenabhubeinrichtung (150) dafür geeignet ist, das Mitnahmeelement (200) aus der Mitnahmestellung in die Freigabestellung zu versetzen, wenn die Haltevorrichtung (144) zur Eintauchstartposition befördert wird.

6. Verfahren zur Verwendung einer Schweisspistole (40) nach einem der vorhergehenden Ansprüche, mit den Schritten:
a) Halten des Schweissbolzens (20) an der Haltevorrichtung,
b) Ansetzen der Schweisspistole (40) mit dem Schweissbolzen (20) an den Untergrund (30), bis die Kontaktfläche (125) den Untergrund (30) kontaktiert,
c) Andrücken der Schweisspistole (40) an den Untergrund (30), bis die Haltevorrichtung (144) an dem Mitnahmeelement (200) anliegt,
d) weiteres Andrücken der Schweisspistole (40) an den Untergrund (30), bis die Auflagefläche (175) an dem Untergrund (30) anliegt,
e) Verriegeln der Bolzenabhubeinrichtung (150),
f) Versetzen des Mitnahmeelements (200) in die Freigabestellung,
g) Befördern der Haltevorrichtung (144) gegen die Schweissrichtung bis zur Eintauchstartposition, und
h) Befördern der Haltevorrichtung (144) von der Eintauchstartposition in die Schweissrichtung.

7. Verfahren nach Anspruch 6, wobei die Schweisspistole (40) nach Anspruch 2 ausgebildet ist, und wobei während Schritt c) die Haltefeder (145) gespannt wird.

8. Verfahren nach einem der Ansprüche 6 bis 7, wobei die Schweisspistole (40) nach Anspruch 3 ausgebildet ist, und wobei während Schritt d) die Mitnahmefeder (180) gespannt wird.

9. Verfahren nach einem der Ansprüche 6 bis 8, wobei während Schritt f) das Mitnahmeelement (200) von der Bolzenabhubeinrichtung (150) versetzt wird.

## Claims

1. Welding gun (40) for welding a welding stud (20) to a substrate (30) in a welding direction, comprising a holding apparatus (144) for holding the welding stud (20) during a welding operation, wherein the welding stud (20) has a contact surface (125) which is intended to make contact with the substrate (30) before and/or during the welding operation, furthermore comprising a stud-lifting device (150) for conveying the holding apparatus (144) counter to the welding direction as far as an immersion start position, furthermore comprising a stud-immersing device (160) for conveying the holding apparatus (144) from the immersion start position in the welding direction, furthermore comprising a bearing element (170) with a bearing surface (175) for supporting the welding gun (40) on the substrate (30), **characterized by** a device for adapting the immersion start position relative to the bearing surface (175) in the welding direction and for moving the stud-lifting device (150) relative to the bearing surface (175) in the welding direction, comprising a locking element (190) for locking the stud-lifting device (150) in two or more different positions relative to the bearing surface (175), and comprising a driving element (200) which is movable between a driving position and a release position, wherein, in the driving position, the driving element (200) transmits a movement of the holding apparatus (144) counter to the welding direction to the stud-lifting device (150), and wherein, in the release position, the driving element (200) enables a movement of the holding apparatus (144) counter to the welding direction relative to the stud-lifting device (150).

2. Welding gun (40) according to Claim 1, wherein the welding gun comprises a holding spring (145) which acts on the holding apparatus (144) relative to the stud-lifting device (150) in the welding direction.

3. Welding gun (40) according to either of the preceding claims, wherein the welding gun (40) has a driving spring (180) which acts on the stud-lifting device (150) relative to the bearing element (170) in the welding direction.

4. Welding gun (40) according to Claims 2 and 3, wherein a spring constant of the driving spring (180) is greater than a spring constant of the holding spring (145).

5. Welding gun (40) according to one of the preceding claims, wherein the stud-lifting device (150) is suitable for moving the driving element (200) from the driving position into the release position when the holding apparatus (144) is conveyed to the immersion start position.

6. Method for using a welding gun (40) according to one of the preceding claims, comprising the steps of:
a) holding the welding stud (20) on the holding apparatus,
b) placing the welding gun (40) with the welding stud (20) on the substrate (30) until the contact surface (125) makes contact with the substrate (30),
c) pressing the welding gun (40) onto the substrate (30) until the holding apparatus (144) bears against the driving element (200),
d) further pressing the welding gun (40) onto the substrate (30) until the bearing surface (175) bears against the substrate (30),
e) locking the stud-lifting device (150),
f) moving the driving element (200) into the release position,
g) conveying the holding apparatus (144) counter to the welding direction as far as the immersion start position, and
h) conveying the holding apparatus (144) from the immersion start position in the welding direction.

7. Method according to Claim 6, wherein the welding gun (40) is designed according to Claim 2, and wherein, during step c), the holding spring (145) is stressed.

8. Method according to either of Claims 6 and 7, wherein the welding gun (40) is designed according to Claim 3, and wherein, during step d), the driving spring (180) is stressed.

9. Method according to one of Claims 6 to 8, wherein, during step f), the driving element (200) is moved by the stud-lifting device (150).

## Revendications

1. Pistolet de soudage (40) pour souder un goujon de soudage (20) dans une direction de soudage à un substrat (30), comprenant un dispositif de maintien (144) pour maintenir le goujon de soudage (20) pendant une opération de soudage, le goujon de soudage (20) présentant une surface de contact (125) qui est prévue pour entrer en contact avec le substrat (30) avant et/ou pendant l'opération de soudage, comprenant en outre un appareil de levage de goujon (150) pour acheminer le dispositif de maintien (144) à l'encontre de la direction de soudage jusqu'à une position de début d'immersion, comprenant en outre un appareil d'immersion de goujon (160) pour acheminer le dispositif de maintien (144) de la position de début d'immersion dans la direction de soudage, comprenant en outre un élément d'appui (170) avec une surface d'appui (175) pour un appui du pistolet de soudage (40) sur le substrat (30), **caractérisé par** un appareil pour ajuster la position de début d'immersion par rapport à la surface d'appui (175) dans la direction de soudage et pour déplacer l'appareil de levage de goujon (150) par rapport à la surface d'appui (175) dans la direction de soudage, comprenant un élément de verrouillage (190) pour verrouiller l'appareil de levage de goujon (150) dans deux positions différentes ou plus par rapport à la surface d'appui (175) et un élément d'entraînement (200), qui peut être déplacé entre une position d'entraînement et une position de libération, l'élément d'entraînement (200) dans la position d'entraînement transmettant un mouvement du dispositif de maintien (144) à l'encontre de la direction de soudage à l'appareil de levage de goujon (150), et l'élément d'entraînement (200) dans la position de libération libérant un mouvement du dispositif de maintien (144) à l'encontre de la direction de soudage par rapport à l'appareil de levage de goujon (150).

2. Pistolet de soudage (40) selon la revendication 1, le pistolet de soudage comprenant un ressort de maintien (145) qui sollicite le dispositif de maintien (144) par rapport à l'appareil de levage de goujon (150) dans la direction de soudage.

3. Pistolet de soudage (40) selon l'une quelconque des revendications précédentes, le pistolet de soudage (40) présentant un ressort d'entraînement (180) qui sollicite l'appareil de levage de goujon (150) par rapport à l'élément d'appui (170) dans la direction de soudage.

4. Pistolet de soudage (40) selon les revendications 2 et 3, la dureté de ressort du ressort d'entraînement (180) étant supérieure à une dureté de ressort du ressort de maintien (145).

5. Pistolet de soudage (40) selon l'une quelconque des revendications précédentes, l'appareil de levage de goujon (150) étant adapté pour déplacer l'élément d'entraînement (200) de la position d'entraînement à la position de libération lorsque le dispositif de maintien (144) est acheminé vers la position de début d'immersion.

6. Procédé d'utilisation d'un pistolet de soudage (40) selon l'une quelconque des revendications précédentes, comprenant les étapes suivantes :
a) le maintien du goujon de soudage (20) sur le dispositif de maintien,
b) la mise en place du pistolet de soudage (40) avec le goujon de soudage (20) sur le substrat (30) jusqu'à ce que la surface de contact (125) soit en contact avec le substrat (30),
c) la pression du pistolet de soudage (40) sur le substrat (30) jusqu'à ce que le dispositif de maintien (144) s'applique sur l'élément d'entraînement (200),
d) la pression supplémentaire du pistolet de soudage (40) sur le substrat (30), jusqu'à ce que la surface d'appui (175) s'applique sur le substrat (30),
e) le verrouillage de l'appareil de levage de goujon (150),
f) le déplacement de l'élément d'entraînement (200) dans la position de libération,
g) l'acheminement du dispositif de maintien (144) à l'encontre de la direction de soudage jusqu'à la position de début d'immersion, et
h) l'acheminement du dispositif de maintien (144) de la position de début d'immersion dans la direction de soudage.

7. Procédé selon la revendication 6, le pistolet de soudage (40) étant configuré selon la revendication 2, et le ressort de maintien (145) étant tendu pendant l'étape c).

8. Procédé selon l'une quelconque des revendications 6 à 7, le pistolet de soudage (40) étant configuré selon la revendication 3, et le ressort d'entraînement (180) étant tendu pendant l'étape d).

9. Procédé selon l'une quelconque des revendications 6 à 8, l'élément d'entraînement (200) étant déplacé par l'appareil de levage de goujon (150) pendant l'étape f).
